# EUROPEAN PATENT SPECIFICATION

(11) **EP 2 821 636 B1**
(45) Date of publication and mention of the grant of the patent: **06.09.2017**
(21) Application number: 13382267.6
(22) Date of filing: 03.07.2013
(51) Int. Cl.: F03D 7/02

(54) **Method of operating a wind turbine**
Verfahren zum Betrieb einer Windturbine
Procédé d'exploitation d'une éolienne

(43) Date of publication of application: 07.01.2015
(73) Proprietor: Alstom Renovables España, S.L., 08005 Barcelona (ES)
(72) Inventor: Bergua, Roger, 08017 Barcelona (ES); Betran Palomas, Jaume, 08172 Sant Cugat Del Vallès (ES)
(74) Representative: ZBM Patents - Zea, Barlocci & Markvardsen

(56) References cited:
- DE-A1-102008 004 948
- US-A- 4 515 525
- US-A- 5 990 568
- US-A1- 2007 158 926
- US-A1- 2010 301 604

## Description

The present disclosure relates to methods of operating a wind turbine, and to wind turbines suitable for performing such methods.

### BACKGROUND ART

Modern wind turbines are commonly used to supply electricity into the electrical grid. Wind turbines of this kind generally comprise a tower and a rotor arranged on the tower. The rotor, which typically comprises a hub and a plurality of blades, is set into rotation under the influence of the wind on the blades. Said rotation generates a torque that is normally transmitted through a rotor shaft to a generator, either directly or through the use of a gearbox. This way, the generator produces electricity which can be supplied to the electrical grid.

During operation of a wind turbine, its structure and components may undergo undesired movements, i.e. oscillatory or repeating displacements in any direction (fore-aft vibrations, side-to-side or lateral vibrations, longitudinal vibrations, torsional vibrations,...) of different magnitudes and of different frequencies (high or low, constant or varying). These movements may be caused by different factors, e.g. by the wind pushing the wind turbine (i.e. wind thrust), blades locally disturbing the wind flow, vibrations transmitted from the gearbox to other components (e.g. tower), rotor movements, nacelle imbalances, rotor imbalances, vibrations from the hub transmitted to the tower etc.

If a tower is subjected to vibrations during a prolonged period of time, fatigue damage may result. Fatigue damage may lead to a reduced life time of the wind turbine tower and/or its components. Furthermore, the danger exists that when vibrations cause resonance in the wind turbine tower, this can lead to a potentially dangerous increase of the vibrations. A further complicating factor is that the size of wind turbines (rotor, nacelle, tower, etc.) nowadays is continuously increasing. Also, as towers become higher, the effect of vibrations becomes more critical. As the height of a tower increases, the flexibility increases and the probability of the tower to suffer torsional oscillations is also higher.

It is also known that the torsional stiffness of lattice towers is significantly lower than the one of the most commonly used tubular tower. This decreased torsional stiffness can potentially induce further vibrations and stresses due to resonance effects. Some offshore configurations, such as e.g. mono-pile and jacket structures, may also have a reduced torsional stiffness, so they may also suffer "dangerous" vibrations and stresses due to resonance effects.

It is known that diverse modes of oscillations (e.g. torsion, side-to-side, fore-aft, etc. modes) can be coupled together. In other words, some modes of oscillation may induce some others and vice versa. For example, out of plane bending modes on the blades may cause a torsional oscillation around the longitudinal axis of a wind turbine tower and vice versa. In this sense, the push of the wind may not be completely uniform on all the blades, such that some blade may be more strongly pushed rearwardly than some other blade depending on e.g. the instantaneous conditions of the wind and the positions of the blades. These different pushes (or "thrusts") of the wind on the blades may cause a torsional oscillation of the tower, which may be aggravated if e.g. a fore-aft tower oscillation occurs at the same time.

In general, the behaviour of a wind turbine with respect to oscillations and potential coupling between various different oscillations may be random and unpredictable due to the many factors which may contribute to the generation of such oscillations. Asymmetric loads may be a relevant source of torsional oscillations. Taking as a reference a frontal view of a wind turbine theoretically split by a theoretical plane into two "symmetric" halves (left and right halves), two blades may be in the left side and one blade may be in the right side at a given time. Particular wind conditions may create a push/thrust on the two left side blades which is higher than the push on the right side blade. This instantaneous situation may cause an initiation of a torsional oscillation of the tower. Generally speaking, any disturbance over the rotor, whether aerodynamic or inertial, will affect the rotor balance and cause some yaw load. Some of these disturbances can be related to structural imbalances (e.g. mass imbalance in one blade) or aerodynamic periodic loads (e.g. wind shear, wind veer, flutter, pitch imbalance, etc.).

The present invention aims at operating a wind turbine in such a manner that in particular torsional oscillations of the tower may be dampened or attenuated. US 2010/0301604 A1 provides an example solving such a problem.

### SUMMARY OF THE INVENTION

In a first aspect, the present invention provides a method of operating a wind turbine according to claim 1. When the brake system is acting on the yaw system, the union between the nacelle and the tower may have a significant rigidity, which causes the nacelle-tower structure to have a given natural frequency. This method (based on temporarily deactivating at least partially the brake system) changes the natural frequency of the nacelle-tower structure for a given period of time (because the rigidity of the coupling is changed). This change of natural frequency may have a positive effect when a torsional oscillation of the tower occurs. An aspect of the proposed method may be that torsional oscillations of the tower and other types of oscillations that are coupled with said torsional oscillation may be eliminated or attenuated as well.

In some embodiments, reactivating the deactivated brake actuators may be performed after a predefined period of time or, alternatively, after a variable period of time. In some of the embodiments based on a variable period of time between deactivation and reactivation of brake actuators, the method may further comprise detecting a reduction of the oscillation, such that the variable period of time may depend on said detected reduction of the oscillation.

In other examples, wherein a predefined period of time is used, the predefined period of time between deactivation and reactivation of brake actuators may have been obtained experimentally or theoretically. The variable period of time between deactivation and reactivation of brake actuators may be a random period of time. An aspect of taking into account a variable period of time may be that this period of time may be dynamically adapted depending on operational conditions. E.g. as a reduction in oscillations is detected, the brake actuator(s) may be activated again.

Also different operational models may be defined comprising different ranges of operational parameters, and each model may have a given predefined period of time for brake actuator(s) to be deactivated when this model is satisfied. This may give to the method a valuable flexibility.

According to embodiments of the method, deactivating the one or more of the brake actuators may comprise deactivating all the brake actuators, or, alternatively, deactivating a majority of the brake actuators. For example, if a total of six brake actuators are provided, four or five of these actuators could be temporarily deactivated. An aspect of this may be that different changes of the natural frequency of the nacelle-tower may be obtained, which may depend on the operational conditions existing at each moment. A more significant change in natural frequencies occurs when all brake actuators are activated and deactivated. Smaller changes in natural frequencies may be enough to dampen certain oscillations, by deactivating only part of the actuators. At the same time, one or more of the brake actuators are still active, so that the nacelle is actually not uncoupled from the tower.

Optionally, the yaw system may further comprise a drive system having an annular gear, a plurality of motors, and a gear system for each of the motors, each gear system having a gearbox and a pinion meshing with the annular gear. Then, the method may further comprise, prior to deactivating the one or more of the brake actuators, causing the drive system to take a pre-operation position so as to at least partially reduce gaps between meshed teeth of the annular gear and pinions.

When all or some of the brake actuators are deactivated, the yaw system may suffer a possibly dangerous sudden movement between gear teeth. This sudden movement may cause damages on elements of the wind turbine. An aspect of causing the drive system to take a pre-operation position may be that said sudden movement (and, thus, possible damages caused by it) may be avoided or at least attenuated.

In some of the embodiments causing the drive system to take a pre-operation position, the method may further comprise estimating whether the next oscillation to occur is clockwise or counter-clockwise. If the next oscillation movement estimated to occur is clockwise, causing the drive system to take the pre-operation position may comprise causing the drive system to generate a (preventive) torque in a counter-clockwise direction (and vice versa).

In alternative embodiments, generation of a (preventive) torque by the drive system in both a clockwise and a counter-clockwise direction may be caused. This may be achieved by e.g. causing a first part (e.g. half) of the motors of the drive system to generate a torque in clockwise direction and a second part (e.g. the other half) of the motors to generate a torque in counter-clockwise direction.

An aspect of generating such a "preventive" torque (in either a clockwise or a counter-clockwise direction) or torques (in both clockwise and counter-clockwise directions) may be that the previously commented attenuation of potential sudden movements of the rotor may be improved, since an active actuation of the drive system as a brake (instead of the brake system) is caused. This may maximize the reduction of stress and damages on the yaw system and, generally, on the rotor.

A particular aspect of generating respective torques in both clockwise and counter-clockwise direction may be that the estimation of whether the next oscillation to occur is clockwise or counter-clockwise may be avoided. Therefore, potential errors and damages caused by said estimation will not occur during operation of the wind turbine, since, in this case, an active bidirectional actuation of the drive system as a brake (instead of the brake system) is caused.

According to embodiments, deactivating the one or more of the brake actuators and reactivating the deactivated brake actuators may be performed a predefined number of times, or, alternatively, a variable number of times. In these latter alternative embodiments, the method may comprise detecting a reduction of the oscillation, in such a way that the variable number of times may depend on said reduction of the oscillation.

An aspect of causing several deactivation-reactivation cycles of the brake actuators may be that the natural frequency of the nacelle-tower structure is changed several times. This multiple change of the natural frequency of the nacelle-tower structure may depend on operational conditions defined by diverse operational parameters (e.g. wind speed). Similarly to that discussed above with respect to other features of the method, different operational models may have assigned different number of deactivation-reactivation cycles to be performed. This way, the flexibility of the method may thus be extended.

Any of the embodiments described may be based on a trial and error strategy, insomuch as the behaviour of a wind turbine with respect to undesired oscillations may be quite random and unpredictable. For example, several iterations of estimating torsional oscillation, deactivating and reactivating brake actuators, and verifying how the oscillation has been reduced may be performed. These iterations may be ended when it is concluded that the oscillation has been sufficiently reduced.

In a further aspect, the invention provides a wind turbine according to claim 11. In some embodiments, the one or more sensors for measuring the torsional oscillation of the tower may comprise one or more sensors for measuring a force exerted by the brake element on the brake actuators. In some particular implementations, each brake actuator may be a brake calliper and the brake element may be a brake disc. Alternatively or additionally, the wind turbine may comprise at least one accelerometer arranged on the nacelle and at least one accelerometer arranged on the tower.

Preferably, the wind turbine may further comprise a control unit configured to perform any of the embodiments of the method described above.

This wind turbine is aimed at executing some or all of the embodiments of the method previously described. Therefore, all the principles and advantages commented in relation to the method are equally of application to this proposed wind turbine.

### BRIEF DESCRIPTION OF THE DRAWINGS

Particular embodiments of the present invention will be described in the following by way of non-limiting examples, with reference to the appended drawings, in which:
Figure 1 is a schematic lateral view of a wind turbine according to an embodiment of the invention;
Figure 2 is a schematic frontal view of a wind turbine similar to the wind turbine of Figure 1; and
Figure 3 is a schematic partial view of a yaw system of a wind turbine according to embodiments of the invention.

### DETAILED DESCRIPTION OF EMBODIMENTS OF THE INVENTION

In the following description, numerous specific details are set forth in order to provide a thorough understanding of examples of the present invention. It will be understood by one skilled in the art however, that examples of the present invention may be practiced without some or all of these specific details. In other instances, well known elements have not been described in detail in order not to unnecessarily obscure the description of the present invention.

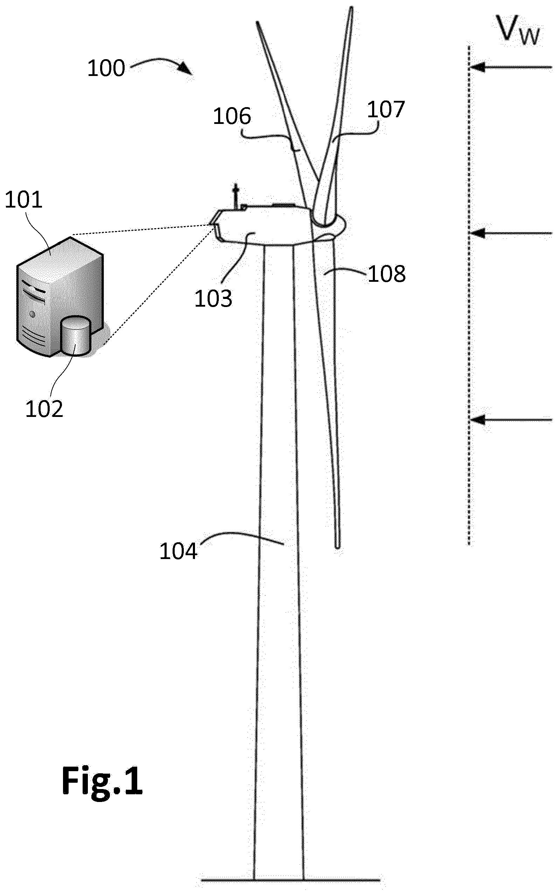

Figure 1 is a schematic lateral view of a wind turbine according to an embodiment of the invention. This wind turbine 100 comprises a tower 104, a nacelle 103 rotatably mounted on the tower 104, and a yaw system (not shown) for rotating the nacelle 103 around the longitudinal axis of the tower 104. This wind turbine 100 also comprises one or more sensors for measuring a torsional oscillation of the tower 104 around its longitudinal axis. The yaw system comprises a yaw brake system having one or more brake actuators configured to selectively engage with a brake element.

Each brake actuator may be a brake calliper and the brake element may be a brake disc. The one or more sensors for measuring the torsional oscillation of the tower 104 may comprise one or more sensors for measuring a force exerted by the brake element (e.g. brake disk) on the brake actuators (e.g. brake callipers). Alternatively (or additionally), the one or more sensors for measuring the torsional oscillation of the tower 104 may comprise at least one accelerometer arranged on the nacelle 103 and at least one accelerometer arranged on the tower 104.

Figure 1 shows the wind turbine 100 comprising three blades 106 - 108, and a control unit 101, which may comprise a storing device 102 (e.g. a hard disk) to store and/or retrieve data consumed and/or produced by the control unit 101. For example, signals produced by the one or more sensors for measuring torsional oscillations may be stored in a database defined in said hard disk 102. The wind W is also represented in this figure. The hard disk 101 may also comprise one or more computer programs implementing one or more embodiments of the method provided by the invention, such that the control unit 101 may retrieve and execute them.

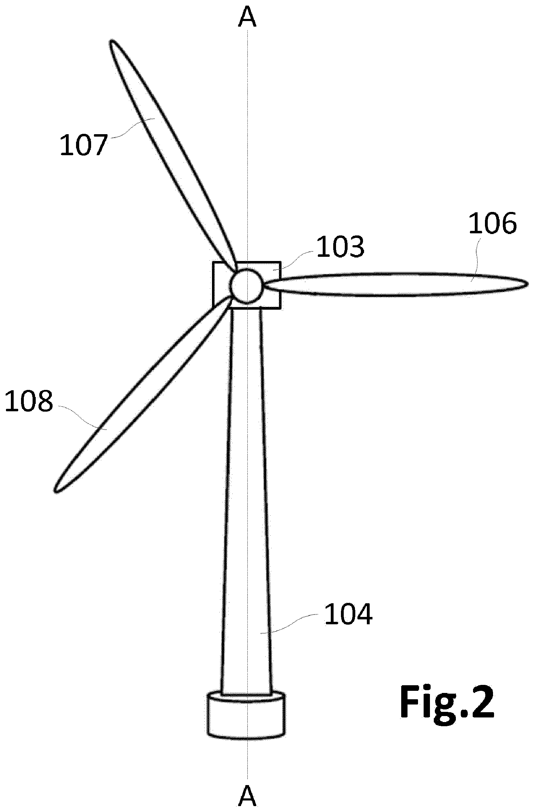

Figure 2 is a schematic frontal view of a wind turbine similar to the wind turbine of Figure 1. Reference numbers from Figure 1 have been reused to indicate similar elements in Figure 2. This wind turbine is shown comprising a tower 104, a nacelle 103 and three blades 106 - 108 in a particular position. This figure also shows a theoretical plane A-A splitting the wind turbine into two "symmetric" halves. Two blades 107, 108 can be seen to the left of the plane A-A and just one blade 106 can be seen to the right of the plane A-A. This instantaneous position of the blades 106 - 108 and possibly particular instantaneous wind conditions may induce asymmetric loads on the wind turbine.

When the blades 106-108 are in this position during their motion (rotation of the rotor), the wind may cause on the left half of the rotor plane (blades 107, 108) a significantly higher push than on the right half of the rotor plane (blade 106). The push or thrust on the blades is thus asymmetric with respect to the plane A-A. This situation, depending on the forces exerted by the wind and the distribution of masses and elasticities in the wind turbine may cause a torsional oscillation of the tower.

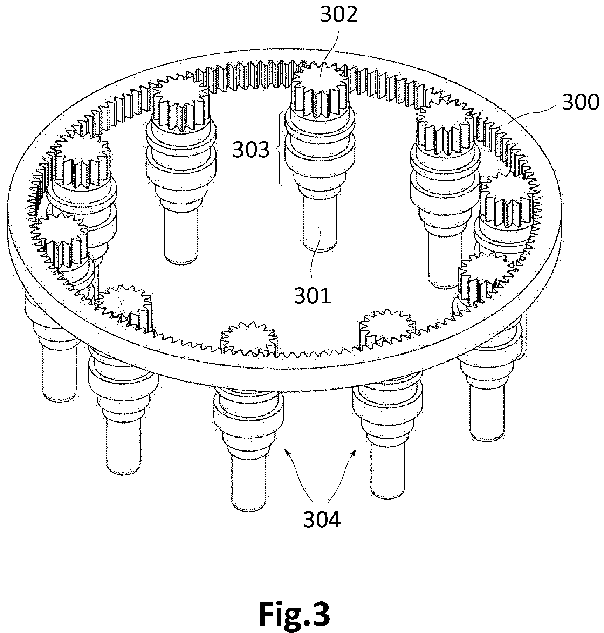

Figure 3 is a schematic partial view of a yaw system of a wind turbine according to embodiments of the invention. In particular, a partial perspective view of a yaw drive system is schematically illustrated. This figure shows an annular gear 300 and ten motor and gear system structures 304, each of said structures 304 having a motor 301, a gearbox 303 and a pinion 302. Each of the pinions 302 is shown meshed with the annular gear 300 such that each of the ten gear systems 303, 302 can transmit a torque from its related motor 301 to the annular gear 300. The shown configuration is comprised in the yaw system in such a way that the annular gear 300 can be attached to the nacelle 103 or to tower 104 of the wind turbine. The nacelle 103 can thus be rotated around the tower's longitudinal axis in or out of the wind direction W by the ten motors 301 and gear system structures 304 acting together on the annular gear 300.

This yaw system may comprise a brake system comprising a brake element (e.g. a brake disk) connected with the annular gear 300 in such a way that retention of the brake disk in a fixed (braking) position causes retention of the annular gear 300 also in a fixed (braking) position. One or more brake actuators (e.g. brake callipers) configured to selectively engage with the brake disk may have the role of causing the mentioned retention of the brake disk in braking position. The motors 301 may also cause the drive system to act as a brake by generating suitable torques on the annular gear 300. This yaw system may be comprised in any of the wind turbines previously described.

The yaw system may comprise any known type of brake system based on having brake actuators causing a pressure to a brake element to set the brake element (and the annular gear) in a braking position.

Embodiments of the method provided by the invention will be now described with reference to Figures 1, 2 and 3. The control unit 101 may receive signals from the sensors for measuring torsional oscillations of the tower 104. The control unit 101 may then compute said received sensor signals in order to determine whether a torsional oscillation of the tower 104 (around its longitudinal axis) is occurring. In this case, the control unit 101 may send suitable control signals to some or all the brake actuators. These control signals may cause deactivation of the brake actuators to disengage from the brake element, and, after a given period of time, activating again the deactivated brake actuators to re-engage with the brake element. Not every torsional oscillation of the tower is necessarily problematic, so that such a control signal may only be sent if the torsional oscillation fulfils certain criteria.

The coupling between the nacelle 103 and the tower 104 by means of the yaw system has a significant stiffness when the brake system is acting to retain the rotor in a prevailing wind direction. This stiffness gives a certain natural frequency to the whole nacelle-tower structure. When some kind of torsional oscillation of the tower occurs, a change of the natural frequency of the structure may cause said oscillation to be at least reduced or even eliminated. If some other kind of oscillation is coupled with the torsional oscillation, this other oscillation may also be attenuated thanks to said change of natural frequency.

The method may be based on a trial and error strategy. That is, the control unit 101 may iteratively receive signals from the sensors, compute them to estimate a torsional oscillation of the tower 104, and send corresponding signals to the brake system to cause deactivation and reactivation of all or some of the brake actuators. In each repetition of this loop, the control unit 101 may verify, from new measurements of the sensors, whether the oscillation has been eliminated or reduced to a certain extent. Then, if it is finally considered that the oscillation has been eliminated or sufficiently reduced, the method may end the repetition of deactivating and reactivating the brake actuators.

The time elapsed between each deactivation and corresponding reactivation of the brake actuators may be a predefined period of time, which may have been theoretically or experimentally calculated. Theoretical calculations of this predefined period of time may include e.g. applying FEM (Finite Element Method) analysis on suitable simulations of the wind turbine operation. Experimental calculations may include computing real data from sensors in a real wind turbine or a prototype.

The period of time between each deactivation and corresponding reactivation of the brake actuators (e.g. brake callipers) may alternatively be variable. For example, the method may estimate a reduction of the oscillation, in which case this variable period of time between deactivation and reactivation of brake callipers may depend on said estimated reduction of the oscillation. For example, if a significant reduction has been estimated, the time between deactivation and reactivation of the brake callipers may be shorter.

Since, as previously commented, the behaviour of the wind turbine with respect to oscillations may be quite random and unpredictable, this variable period of time may be a random period of time or may depend on some other factor(s). For example, the method may comprise estimating a reduction of the torsional oscillation, in which case, the variable period of time may depend on said reduction of the torsional oscillation. In particular, the variable period of time may be shorter as the reduction of the oscillation increases.

Similarly, the method may consider deactivating-reactivating a certain number of the brake callipers. This number of brake actuators to be deactivated-reactivated may also depend on the estimated reduction of the oscillation.

Deactivation of all the brake callipers may cause an abrupt movement of the nacelle with respect to the tower due to e.g. the action of the wind on the rotor, which may cause some stress on the yaw system. This abrupt movement of the nacelle may be attenuated by causing, prior to deactivating the brake callipers, the drive system of the yaw system (as the one partially shown in Figure 3) to take a pre-operation position so as to reduce gaps between meshed teeth of the annular gear 300 and pinions 302 of the drive system. The drive system may thus be positioned and prepared to act as a brake instead of the brake system, such that a possible abrupt motion of the nacelle may be reduced to some extent.

A torsional oscillation of the tower 104 may be seen as a movement comprising a first torsional sense and a second torsional sense. The method may comprise the control unit 101 estimating, from measurements of the sensors, the next torsional sense to occur, and sending suitable signals to the drive system depending on the estimated next torsional sense to occur. These signals sent to the drive system may be aimed at generating a certain torque on the annular gear in a rotational sense opposed to the estimated next torsional sense to occur. This torque, in combination with the previously cited pre-operation position, may cause the previously mentioned abrupt motion of the nacelle (when deactivating brake actuators) to be further attenuated. This way, less stress may be suffered by the yaw system.

In some examples, the deactivation and reactivation of the brake actuators may be repeated a given number of times to change several times the natural frequency of the nacelle-tower structure. This given number of times may be either a predefined or a variable number of times. In the implementations where a reduction of the oscillation is estimated, this variable number of times may depend on said estimated reduction. Even, this variable number of times may be a random number of times, since the behaviour of the wind turbine with respect to oscillations may be quite random and unpredictable. This principle of repeating several times the deactivation-reactivation of the brake actuators may also be applied in the context of trial and error strategies as previously described.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. Method of operating a wind turbine having a tower, a nacelle rotatably mounted on the tower, a yaw system having a yaw brake system and a yaw drive system for rotating the nacelle around the longitudinal axis of the tower, and one or more sensors for measuring a torsional oscillation of the tower around a longitudinal axis of the tower; wherein
the yaw brake system has one or more brake actuators configured to selectively engage with a brake element;
the method comprising
detecting a torsional oscillation of the tower around the longitudinal axis of the tower based on measurements of the sensors;
upon detection of the torsional oscillation, deactivating one or more of the brake actuators to disengage from the brake element, such that a natural frequency of a structure constituted by the tower and nacelle is changed; and
reactivating the deactivated brake actuators to engage with the brake element, such that the natural frequency of the structure constituted by the tower and nacelle is restored; wherein
the yaw drive system is not used to rotate the nacelle around the longitudinal axis of the tower between the deactivation and reactivation of the brake actuators.

2. Method according to claim 1, wherein reactivating the deactivated brake actuators is performed after a predefined period of time.

3. Method according to claim 1, wherein reactivating the deactivated brake actuators is performed after a variable period of time.

4. Method according to claim 3, further comprising detecting a reduction of the oscillation, wherein the variable period of time depends on said detected reduction of the oscillation.

5. Method according to any of claims 1 to 4, wherein deactivating the one or more of the brake actuators comprises deactivating all the brake actuators.

6. Method according to any of claims 1 to 4, wherein deactivating the one or more of the brake actuators comprises deactivating a majority of the brake actuators.

7. Method according to any of claims 1 to 6, wherein the yaw drive system has an annular gear, a plurality of motors, and a gear system for each of the motors, each gear system having a gearbox and a pinion meshing with the annular gear, and wherein
the method further comprises, prior to deactivating the one or more of the brake actuators, causing the yaw drive system to take a pre-operation position so as to at least partially reduce gaps between meshed teeth of the annular gear and pinions.

8. Method according to claim 7, wherein the oscillation around the longitudinal axis of the tower comprises a clockwise and a counter-clockwise direction around the longitudinal axis of the tower, wherein
the method further comprises, prior to causing the yaw drive system to take the pre-operation position, estimating whether the next oscillation movement to occur is in the clockwise or counter-clockwise direction around the longitudinal axis of the tower, and wherein
if the next oscillation movement estimated to occur is in the clockwise direction, causing the yaw drive system to take the pre-operation position comprises causing the drive system to generate a torque in the counter-clockwise direction, and
if the next oscillation movement estimated to occur is in the counter-clockwise direction, causing the drive system to take the pre-operation position comprises causing the drive system to generate a torque in the clockwise direction.

9. Method according to any of claims 1 to 8, wherein deactivating the one or more of the brake actuators and reactivating the deactivated brake actuators is performed a predefined number of times.

10. Method according to any of claims 1 to 8, wherein deactivating the one or more of the brake actuators and reactivating the deactivated brake actuators is performed a variable number of times.

11. Wind turbine having a tower, a nacelle rotatably mounted on the tower, a yaw system having a yaw brake system and a yaw drive system, and one or more sensors for measuring a torsional oscillation of the tower around a longitudinal axis of the tower;
wherein the yaw brake system has one or more brake actuators configured to selectively engage with a brake element; wherein
the yaw drive system is configured to rotate the nacelle around the longitudinal axis of the tower; and wherein
the wind turbine further comprises a control unit configured to perform a method according to any of claims 1 to 10.

12. Wind turbine according to claim 11, wherein the one or more sensors for measuring the torsional oscillation of the tower comprise one or more sensors for measuring a force exerted by the brake element on the brake actuators.

13. Wind turbine according to claim 12, wherein each brake actuator is a brake calliper and the brake element is a brake disc.

14. Wind turbine according to claim 11, wherein the one or more sensors for measuring the torsional oscillation of the tower comprise at least one accelerometer arranged on the nacelle and at least one accelerometer arranged on the tower.

## Patentansprüche

1. Verfahren zum Betrieb von einer Windturbine umfassend einen Turm, eine auf dem Turm drehbar montierte Gondel, ein Giersystem, das ein Gierbremssystem und ein Gierantriebssystem zur Drehung der Gondel um die Längsachse des Turms herum hat, und einen oder mehrere Sensoren zur Messung von einer Drehschwingung des Turms um eine Längsachse des Turms herum; wobei
das Gierbremssystem einen oder mehrere Bremszylinder hat, die konfiguriert sind, um gezielt in ein Bremselement einzugreifen;
wobei das Verfahren folgendes umfasst
das Ermitteln von einer Drehschwingung des Turms um die Längsachse des Turms herum basierend auf Messungen durch die Sensoren;
das Deaktivieren, nach der Ermittlung einer Drehschwingung, von einem oder mehreren Bremszylindern, um diese vom Bremselement zu entkuppeln, so dass eine Eigenfrequenz einer aus Turm und Gondel bestehenden Struktur verändert wird; und
das Reaktivieren der deaktivierten Bremszylinder, damit diese in das Bremselement eingreifen, so dass die Eigenfrequenz der aus Turm und Gondel bestehenden Struktur wiederhergestellt wird; wobei
das Gierantriebssystem zwischen der Deaktivierung und der Reaktivierung der Bremszylinder nicht zur Drehung der Gondel um die Längsachse des Turms herum eingesetzt wird.

2. Verfahren nach Anspruch 1, wobei das Reaktivieren der deaktivierten Bremszylinder nach einem vorherbestimmten Zeitraum durchgeführt wird.

3. Verfahren nach Anspruch 1, wobei das Reaktivieren der deaktivierten Bremszylinder nach einem variablen Zeitraum durchgeführt wird.

4. Verfahren nach Anspruch 3, weiterhin umfassend das Ermitteln von einer Reduktion der Schwingung, wobei der variable Zeitraum von der ermittelten Reduktion der Schwingung abhängt.

5. Verfahren nach einem der Ansprüche 1 bis 4, wobei das Deaktivieren vom einen bzw. von den mehreren Bremszylindern das Deaktivieren von allen Bremszylindern umfasst.

6. Verfahren nach einem der Ansprüche 1 bis 4, wobei das Deaktivieren vom einen bzw. von den mehreren Bremszylindern das Deaktivieren von einer Mehrheit der Bremszylinder umfasst.

7. Verfahren nach einem der Ansprüche 1 bis 6, wobei das Gierantriebssystem einen Zahnring, eine Vielzahl von Antrieben und ein Getriebesystem für jeden Antrieb umfasst, wobei jedes Getriebesystem ein Getriebe und ein Ritzel umfasst, das in den Zahnring eingreift, und wobei
das Verfahren weiterhin folgendes umfasst: das Veranlassen der Annahme von einer vorbetrieblichen Position durch das Gierantriebssystem vor der Deaktivierung des einen oder der mehreren Bremszylinder, um Abstände zwischen Zahneingriffen des Zahnrings und des Ritzels mindestens teilweise zu verringern.

8. Verfahren nach Anspruch 7, wobei die Schwingung um die Längsachse des Turms herum eine Richtung im Uhrzeigersinn und eine Richtung gegen den Uhrzeigersinn um die Längsachse des Turms herum umfasst, wobei
das Verfahren weiterhin folgendes umfasst: das Feststellen, ob die nächstfolgende Schwingung im oder gegen den Uhrzeigersinn um die Längsachse des Turms herum zu erwarten ist, bevor die Annahme der vorbetrieblichen Position durch das Gierantriebssystem veranlasst wird, und
wobei
falls die nächstfolgende Schwingung im Uhrzeigersinn zu erwarten ist, das Veranlassen der Annahme der vorbetrieblichen Position durch das Gierantriebssystem das Veranlassen des Erzeugens von einem Drehmoment gegen den Uhrzeigersinn durch das Antriebssystem umfasst, und
falls die nächstfolgende Schwingung gegen den Uhrzeigersinn zu erwarten ist, das Veranlassen der Annahme der vorbetrieblichen Position durch das Antriebssystem das Veranlassen des Erzeugens von einem Drehmoment im Uhrzeigersinn durch das Antriebssystem umfasst.

9. Verfahren nach einem der Ansprüche 1 bis 8, wobei das Deaktivieren des einen oder der mehreren Bremszylinder und das Reaktivieren von den deaktivierten Bremszylindern mit einer vorherbestimmten Anzahl von Wiederholungen durchgeführt wird.

10. Verfahren nach einem der Ansprüche 1 bis 8, wobei das Deaktivieren des einen oder der mehreren Bremszylinder und das Reaktivieren von den deaktivierten Bremszylindern mit einer variablen Anzahl von Wiederholungen durchgeführt wird.

11. Windturbine umfassend einen Turm, eine auf dem Turm drehbar montierte Gondel, ein Giersystem, das ein Gierbremssystem und ein Gierantriebssystem hat, und einen oder mehrere Sensoren zur Messung von einer Drehschwingung des Turms um eine Längsachse des Turms herum;
wobei das Gierbremssystem einen oder mehrere Bremszylinder hat, die konfiguriert sind, um gezielt in ein Bremselement einzugreifen; wobei
das Gierantriebssystem konfiguriert ist, um die Gondel um die Längsachse des Turms herum zu drehen; und wobei
die Windturbine weiterhin eine Steuereinheit umfasst, die konfiguriert ist, um ein Verfahren nach einem der Ansprüche 1 bis 10 durchzuführen.

12. Windturbine nach Anspruch 11, wobei der eine oder die mehreren Sensoren zur Messung der Drehschwingung des Turms einen oder mehrere Sensoren zur Messung von einer durch das Bremselement auf die Bremszylinder ausgeübten Kraft umfassen.

13. Windturbine nach Anspruch 12, wobei jeder Bremszylinder ein Bremssattel ist und das Bremselement eine Bremsscheibe ist.

14. Windturbine nach Anspruch 11, wobei der eine oder die mehreren Sensoren zur Messung der Drehschwingung des Turms mindestens einen auf der Gondel angeordneten Beschleunigungsmesser und mindestens einen auf dem Turm angeordneten Beschleunigungsmesser umfassen.

## Revendications

1. Procédé de fonctionnement d'une éolienne ayant une tour, une nacelle montée à rotation sur la tour, un système de lacet ayant un système de frein de lacet et un système d'entraînement de lacet pour faire pivoter la nacelle autour de l'axe longitudinal de la tour, et un ou plusieurs capteurs pour mesurer une oscillation de torsion de la tour autour d'un axe longitudinal de la tour ; dans lequel
le système de frein de lacet a un ou plusieurs moteurs de frein configurés pour intervenir de façon sélective dans un élément de frein ;
comprenant le procédé
détecter une oscillation de torsion de la tour autour de l'axe longitudinale de la tour à partir de mesures effectuées par les capteurs ;
désactiver, lorsqu'une oscillation de torsion est détectée, un ou plusieurs moteurs de frein afin de les débrayer de l'élément de frein, de façon qu'une fréquence propre d'une structure constituée par la tour et la nacelle est modifiée ; et
réactiver les moteurs de frein désactivés afin de les faire intervenir avec l'élément de frein, de façon que la fréquence propre de la structure constituée par la tour et la nacelle est rétablie ; dans lequel
le système d'entraînement de lacet n'est pas utilisé pour faire pivoter la nacelle autour de l'axe longitudinal de la tour entre la désactivation et la réactivation des moteurs de frein.

2. Procédé selon la revendication 1, dans lequel la réactivation des moteurs de frein désactivés est mise à exécution après une période de temps prédéfinie.

3. Procédé selon la revendication 1, dans lequel la réactivation des moteurs de frein désactivés est mise à exécution après une période de temps variable.

4. Procédé selon la revendication 3, comprenant en outre détecter une réduction de l'oscillation, dans lequel la période variable de temps dépende de ladite réduction détectée de l'oscillation.

5. Procédé selon l'une quelconque des revendications 1 à 4, dans lequel désactiver l'un ou les plusieurs moteurs de frein comprend désactiver tous les moteurs de frein.

6. Procédé selon l'une quelconque des revendications 1 à 4, dans lequel désactiver l'un ou les plusieurs moteurs de frein comprend désactiver la majorité des moteurs de frein.

7. Procédé selon l'une quelconque des revendications 1 à 6, dans lequel le système d'entraînement de lacet a une couronne dentée, une pluralité de moteurs, et un système d'entraînement pour chacun des moteurs, ayant chaque système d'entraînement une boîte de vitesses et un pignon intervenant dans la couronne dentée, et dans lequel
le procédé comprend en outre, faire que le système d'entraînement de lacet adopte une position pré-opérationnelle avant de désactiver l'un ou les plusieurs moteurs de frein afin de réduire au moins en partie des espaces existants entre des dents engrenés de la couronne dentée et les pignons.

8. Procédé selon la revendication 7, dans lequel l'oscillation autour de l'axe longitudinal de la tour comprend un sens horaire et un sens antihoraire autour de l'axe longitudinal de la tour, dans lequel
le procédé comprend en outre, estimer si le prochain mouvement d'oscillation est anticipé dans le sans horaire ou dans le sens antihoraire autour de l'axe longitudinal de la tour, avant de faire que le système d'entraînement de lacet adopte la position pré-opérationnelle, et dans lequel
si le prochain mouvement d'oscillation est anticipé dans le sens horaire, faire que le système d'entraînement de lacet adopte la position pré-opérationnelle comprend faire que le système d'entraînement génère un moment dans le sens anti-horaire, et
si le prochain mouvement d'oscillation est anticipé dans le sens anti-horaire, faire que le système d'entraînement adopte la position pré-opérationnelle comprend faire que le système d'entraînement génère un moment dans le sens horaire.

9. Procédé selon l'une quelconque des revendications 1 à 8, dans lequel la désactivation de l'un ou des plusieurs moteurs de frein et la réactivation des moteurs de frein désactivés sont effectuées un nombre de fois prédéfini.

10. Procédé selon l'une quelconque des revendications 1 à 8, dans lequel la désactivation de l'un ou des plusieurs moteurs de frein et la réactivation des moteurs de frein désactivés sont effectuées un nombre de fois variable.

11. Éolienne ayant une tour, une nacelle montée à rotation sur la tour, un système de lacet ayant un système de frein de lacet et un système d'entraînement de lacet, et un ou plusieurs capteurs pour mesurer une oscillation de torsion de la tour autour de l'axe longitudinal de la tour ;
dans lequel le système de frein de lacet a un ou plusieurs moteurs de frein configurés pour intervenir de façon sélective dans un élément de frein ; dans lequel
le système d'entraînement de lacet est configuré pour faire pivoter la nacelle autour de l'axe longitudinal de la tour ; et dans lequel
l'éolienne comprend en outre une unité de contrôle configurée pour mettre à exécution un procédé selon l'une quelconque des revendications 1 à 10.

12. Éolienne selon la revendication 11, dans laquelle l'un ou les plusieurs capteurs pour mesurer l'oscillation de torsion de la tour comprennent un ou plusieurs capteurs pour mesurer une force exercée par l'élément de frein sur les moteurs de frein.

13. Éolienne selon la revendication 12, dans laquelle chaque moteur de frein est un étrier de frein et l'élément de frein est un disque de frein.

14. Éolienne selon la revendication 11, dans laquelle l'un ou les plusieurs capteurs pour mesurer l'oscillation de torsion de la tour comprennent au moins un accéléromètre disposé sur la nacelle et au moins un accéléromètre disposé sur la tour.
